# EUROPÄISCHE PATENTANMELDUNG

(11) **EP 4 506 166 A1**
(43) Veröffentlichungstag der Anmeldung: **12.02.2025**
(21) Anmeldenummer: 23190783.3
(22) Anmeldetag: 10.08.2023
(51) Int. Cl.: B32B 27/40, C08G 18/10, C08G 18/32, C08G 18/42, C08G 18/76, C08G 18/79, C09J 175/10

(54) **VERFAHREN ZUR HERSTELLUNG EINES RECYCLEFÄHIGEN MONOMATERIAL-MEHRSCHICHTSYSTEMS**

(71) Anmelder: Covestro Deutschland AG, 51373 Leverkusen (DE)
(72) Erfinder: Thiebes, Christoph, 51061 Köln (DE); Guttmann, Thomas, 40764 Langenfeld (DE); Fait, Thomas, 51063 Köln (DE)
(74) Vertreter: Levpat

(57) **Zusammenfassung**

Die Erfindung betrifft ein Verfahren zur Herstellung eines Monomaterial-Mehrschichtsystems, insbesondere eines recyclefähigen Monomaterial-Mehrschichtsystems, wobei das Verfahren die folgenden Schritte umfasst oder daraus besteht:
I) Bereitstellen von wenigstens zwei Monomaterial-Schichten;
II) Auftragen eines Zweikomponentenklebstoffs mittelbar oder unmittelbar auf wenigstens eine der beiden bereitgestellten Monomaterial-Schichten, wobei der Zweikomponentenklebstoff mindestens eine Isocyanat-reaktive Komponente sowie mindestens eine Isocyanat-Komponente umfasst;
III) Verbinden der Monomaterial-Schichten mittels des Zweikomponentenklebstoffs sowie Aushärten des Zweikomponentenklebstoffs unter Erhalt des Monomaterial-Mehrschichtsystems;

dadurch gekennzeichnet, dass das Material der Monomaterial-Schichten Polyolefine umfasst und der Anteil des Polyolefins von 80,0 bis 99,30 Gew.-% beträgt, bezogen auf das Gesamtgewicht des Monomaterial-Mehrschichtsystems,
der Anteil des Zweikomponentenklebstoffs 0,70 bis 20,0 Gew.-% beträgt, bezogen auf das Gesamtgewicht des Monomaterial-Mehrschichtsystems,
die Isocyanat-reaktive Komponente und/oder die Isocyanat-Komponente [CH₂-O]ₙ-Einheiten enthält und
der ausgehärtete Zweikomponentenklebstoff einen Anteil von 7,0 bis 25,0 Gew.-% an [CH₂-O]ₙ-Einheiten aufweist, bezogen auf das Gesamtgewicht des Klebstoffs, wobei n eine Zahl von 2 bis 50 ist.

## Beschreibung

Die vorliegende Erfindung betrifft ein Verfahren zur Herstellung eines Monomaterial-Mehrschichtsystems, insbesondere eines recyclefähigen Monomaterial-Mehrschichtsystems, das durch dieses Verfahren erhaltene oder erhältliche Monomaterial-Mehrschichtsystem sowie die Verwendung des Monomaterial-Mehrschichtsystems. Darüber hinaus betrifft die Erfindung die Verwendung eines Zweikompontenklebstoffs in Monomaterial-Mehrschichtsystemen, insbesondere zur Verbesserung von deren Recyclingfähigkeit. Schließlich betrifft die Erfindung ein Verfahren zur Gewinnung eines Rezyklats aus Monomaterial-Mehrschichtsystem-haltigem Abfall, welcher ein erfindungsgemäßes Monomaterial-Mehrschichtsystem enthält, sowie ein Formteil, welches durch die Verarbeitung eines gemäß dem vorgenannten Recyclingverfahren erhaltenen oder erhältlichen Rezyklats erhalten oder erhältlich ist.

### Stand der Technik

Zur Verpackung von Industrie- und Konsumgütern werden häufig Verpackungen eingesetzt, die aus Folienverbünden (Mehrschichtsysteme) hergestellt werden, welche aus Folienlagen mit unterschiedlichen Eigenschaften bestehen. Solche Folienverbünde können beispielsweise durch Laminieren mit einem Klebstoff oder durch Extrusion, ggf. unter Einsatz einer Zwischenlage als Haftschicht (Tie-Layer) hergestellt werden. Beispielsweise enthalten solche mehrlagigen Folienverbünde Polyolefin- und Polyester- und Aluminiumfolienlagen. Die für die Verwendung als Verpackungsmaterial notwendigen Eigenschaften wie mechanische Festigkeit, Siegelfähigkeit und Barrierewirkung lassen sich durch die Kombination verschiedener Materialien mit ganz spezifischen Eigenschaften generieren. Leider lassen sich diese Verbundmaterialien aufgrund der verschiedenen Materialeigenschaften nicht im Sinne eines mechanischen Recyclings zu hochwertigen Rezyklaten verarbeiten. Das Recycling stellt jedoch eine interessante Möglichkeit dar, um Ressourcen zu schonen und die Umweltbelastung zu verringern. Immer mehr Unternehmen sind oft aus den vorgenannten Gründen sowie aus Kostengründen und regulatorischen Anforderungen bestrebt, ihre Emissionen zu reduzieren, weshalb auch dort Recyclingkonzepte wünschenswert sind. In der Industrie wird daher nach Wegen gesucht, um die Qualität der durch das mechanische Recycling von Verpackungen erzeugten Rezyklate zu erhöhen, damit diese in immer höheren Anteilen bei der Herstellung von Folien eingesetzt werden können.

In der letzten Zeit wurden sogenannte Monomaterial-Verpackungen bestehend aus Monomaterial-Schichtsystemen vorgestellt, die sich nach Gebrauch besonders gut für ein mechanisches Recycling eignen. Diese werden in der Regel hergestellt durch Extrusionslaminieren oder durch Laminieren von zwei Polyolefinfolienlagen mit einem Klebstoff, insbesondere durch Laminieren mit einem Zweikomponenten(2K)-Polyurethanklebstoff. Letzteres bietet den Vorteil, dass eine größere Bandbreite von Materialien eingesetzt werden kann, z.B. auch vorbeschichtete Folienlagen. Bei den sogenannten Monomaterialverpackungen werden ebenfalls Folienlagen mit verschiedenen Eigenschaften miteinander kombiniert, die jedoch größtenteils aus Materialien der gleichen Materialklasse, wie beispielsweise der Polyolefine bestehen. Die unterschiedlichen Eigenschaften der jeweiligen Folienlage können erreicht werden durch die Wahl unterschiedlicher Basispolymere, Zuschlagsstoffe, Vorbehandlung, insbesondere Beschichtung.

Es zeigt sich jedoch, dass sich die beim mechanischen Recyling von solchen Verpackungen bestehend aus Monomaterial-Schichtsystemen erhaltenen Rezyklate nicht oder nur bedingt zur Herstellung von qualitativ hochwertigen Folien oder anderen Formteilen eignen und wenn überhaupt nur in untergeordneter Menge beim Herstellprozess von neuen Polyolefinfolien aus sogenannten Virgin-Materialien zugesetzt werden können. Ein Problem besteht oft darin, dass die unter Einsatz von Rezyklat hergestellten neuen Folien optische Mängel und/oder im Vergleich zu aus "Virgin" Materialien hergestellten Folien schlechterer mechanische Eigenschaften (z.B. Reißdehnung, Modul) aufweisen, was auf die üblicherweise beim Laminieren von Folien verwendeten 2K-Polyurethanklebstoffe zurückgeführt werden, die in ausgehärteter Form mit Polyolefinen unverträglich sind und deren Verwendung zunehmend kritisch gesehen wird. Die Verwendung solcher Klebstoffe wird im Rahmen von Produktspezifikationen für recyclingerechte Verpackungen auf geringe Gewichtsanteile beschränkt und es wird nach Alternativen gesucht.

CN 110861380 A beschreibt eine recyclingfähige Verpackung bei der ein Polyurethanklebstoff mit Barriere-Eigenschaften eingesetzt wird. Der Gehalt an nicht näher beschriebenen lösemittelfreiem Polyurethan-Klebstoff im Verbund wird hierbei auf unter 1 % begrenzt. Ein Einfluss des Klebstoffes auf die Qualität der gewonnenen Rezyklate wird nicht erwähnt. Ein Einsatz von Klebstoff-Rohstoffen basierend auf nachwachsenden Rohstoffen wird nicht beschrieben.

WO 2019/209337 A1 beschreibt mehrlagige Verbundfolien die eine erhöhte Recyclingfähigkeit aufweisen und unter Verwendung von Polylactiden als Zwischenlage hergestellt werden. Polylactide lassen sich auf Basis von nachwachsenden Rohstoffen herstellen. Der Einsatz von Polyolefinen als Folienlage wird nicht explizit beschrieben.

WO 2021/069668 A1 beschreibt eine recyclingfähige Verpackung auf Polyethylenbasis, es wird eine mögliche Verwendung von lösemittelfreien oder lösemittelhaltigen Klebstoffen auf Polyurethanbasis erwähnt, ohne dass auf die genaue Zusammensetzung des Klebstoffes eingegangen würde. Es wird nicht auf den Einfluss des Klebstoffes auf die Rezyklatqualität eingegangen.

WO 2019/027527 A1 beschreibt eine recyclingfähige Verpackung auf Polyethylenbasis bei der ein lösemittelhaltiger Polyurethanklebstoff mit Barriere-Eigenschaften eingesetzt wird. Es wird nicht auf den Einfluss des Klebstoffes auf die Rezyklatqualität eingegangen.

### Aufgabe der Erfindung

Die Aufgabe der vorliegenden Erfindung bestand demnach in der Bereitstellung eines Verfahrens zur Herstellung eines Monomaterials-Mehrschichtsystems, welches recyclefähig ist und nach dem Recyceln zu einem Rezyklat mit einer guten Qualität, insbesondere mit einer guten Homogenität führt. Des Weiteren sollten im Besonderen Klebstoffe für die Herstellung der Monomaterial-Mehrschichtsysteme zum Einsatz kommen, die sich mindesten zum Teil aus biobasierten Rohstoffen herstellen lassen und die gegebenenfalls zu einer guten Verbundfestigkeit der Monomaterial-Mehrschichtsysteme führen.

### Lösung der Aufgabe und detaillierte Beschreibung

Die Aufgabe wurde gelöst durch ein Verfahren gemäß Anspruch 1.

Im Zuge der Entwicklungsarbeiten die zu der vorliegenden Erfindung geführt haben, wurde überraschenderweise festgestellt, dass der Einsatz eines spezifischen Zweikomponentenklebstoffs bei der Herstellung eines Monomaterial-Mehrschichtsystems, welches hauptsächlich Polyolefine umfasst (80,0 bis 99,30 Gew.-%, bezogen auf das Gesamtgewicht des Monomaterial-Mehrschichtsystems), zu recyclefähigen Monomaterial-Mehrschichtsystemen führt, die insbesondere eine hohe Verbundfestigkeit aufweisen. Beim Recyceln dieser Monomaterial-Mehrschichtsysteme werden Rezyklate mit verbesserter Qualität erhalten, insbesondere mit einer guten Homogenität. Rezyklate eigenen sich aufgrund ihrer guten Qualität daher für die weitere Verarbeitung, insbesondere für die Verarbeitung zu Formteilen.

Im Rahmen der vorliegenden Erfindung wird unter dem Begriff "recyclefähig" bzw. "Recyclefähigkeit" die Eignung eines Monomaterial-Mehrschichtsystems verstanden, sich mittels eines mechanischen Recyclingverfahrens zu einem Rezyklat mit hoher Homogenität verarbeiten zu lassen, selbst wenn das Monomaterial-Mehrschichtsystem einen Anteil von einem Zweikomponentenklebstoff von > 1,0 Gew.-% aufweist, bezogen auf das Gesamtgewicht des Monomaterial-Mehrschichtsystems. Die Homogenität des Rezyklats wird ermittelt, in dem man das Monomaterial-Mehrschichtsystem bei hohen Temperaturen in einem Extruder kompoundiert und aus dem Extrudat durch Pressen einen Film mit einer Dicke von 200 µm herstellt. Dieser Film wird optisch mit einem Lichtmikroskop und gegebenenfalls unterstützt mit einem Auswertungsprogramm auf Inhomogenitäten untersucht. Ein Rezyklat mit hoher bzw. guter Homogenität zeichnet sich dadurch aus, dass die Anzahl der Fehlstellen pro untersuchter Fläche von 1,1 cm², die mit Hilfe einer mikroskopischen Untersuchung ermittelt werden (Lichtmikroskop) < 3000, bevorzugt < 2000, besonders bevorzugt < 1500 ist. In Bezug auf die Gesamtfläche der Fehlstellen ist einen homogenes Rezyklat gegeben, wenn die Gesamtfläche der Fehlstellen im gepressten Film, der aus dem erzeugten Rezyklat gepresst worden ist, < 3%, bevorzugt < 2,5% beträgt. Abweichend davon kann die Homogenität an einem Film ermittelt werden, der hergestellt wird aus einem Extrudat, welches erhalten wird, in dem eine bestimmte Menge des zerkleinerten ausgehärteten Klebstoffes mit einer definierten Menge der weiteren Bestandteile des Monomaterialschichtsystems (alternativ: "die verwendeten Monomaterial-Schichten") bei hohen Temperaturen in einem Extruder kompoundiert und aus dem Extrudat durch Pressen einen Film herstellt. Diese Methode ist insbesondere geeignet dazu, den maximalen Klebstoffanteil zu ermitteln, bei dem noch ein recylingfähiges Monomaterial-Schichtsystem erhalten wird.

Die Verbundfestigkeit des Monomaterial-Mehrschichtsystems wird erfindungsgemäß im 180°-Schälversuch ermittelt (180°-Schälfestigkeit), in dem Verbundfolien in 15 mm breite Streifen zerschnitten werden. Anschließend werden die Streifen bei 23°C in einer Universalprüfmaschine für Schälfestigkeiten der Firma Zwick (Typ 5kN Allround Table-top BT2-FA005TH.A50.002) mit einer Geschwindigkeit von 100 mm/min bei einem Winkel von 2 × 90° (180°) abgezogen und die dabei erforderliche Kraft in Newton gemessen. Eine ausreichende Verbundfestigkeit ist gegeben, wenn ein Wert von mindestens 0,5 N/15mm erreicht wird.

Unter Monomaterial-Mehrschichtsystem wird erfindungsgemäß ein Schichtsystem verstanden, das aus wenigsten zwei Monomaterial-Schichten und einem Zweikomponentenklebstoff hergestellt wird. Die Herstellung umfasst oder besteht aus folgenden Schritten:
I) Bereitstellen von wenigstens zwei Monomaterial-Schichten;
II) Auftragen eines Zweikomponentenklebstoffs mittelbar oder unmittelbar auf wenigstens eine der beiden bereitgestellten Monomaterial-Schichten, wobei der Zweikomponentenklebstoff mindestens eine Isocyanat-reaktive Komponente sowie mindestens eine Isocyanat-Komponente umfasst;
III) Verbinden der Monomaterial-Schichten mittels des Zweikomponentenklebstoffs sowie Aushärten des Zweikomponentenklebstoffs unter Erhalt des Monomaterial-Mehrschichtsystems.

Das Material der Monomaterial-Schicht umfasst Polyolefine, wobei der Anteil des Polyolefins von 80,0 bis 99,30 Gew.-% beträgt, bevorzugt von 95,0 bis 98,0 Gew.-%, bezogen auf das Gesamtgewicht des Monomaterial-Mehrschichtsystems. Dies sind vorzugsweise Polyolefin-Folien, welche darüber hinaus beschichtet sein können. Die Monomaterial-Schicht kann ferner dem Fachmann bekannte Zuschlagstoffe enthalten, insbesondere Antiblockmittel, Farbstoffe, Pigmente und Stabilisatoren. Die Monomaterial-Schichten, wie z.B. die Polyolefin-Folien, können durch verschiedene, dem Fachmann bekannte Verfahren, beispielsweise durch Blasfolienextrusion, hergestellt werden. Durch diese Verfahren können Monomaterial-Schichten aus mehreren Lagen unterschiedlicher oder gleicher Zusammensetzungen erhalten werden. Die Monomaterial-Schichten können zur Einstellung von gewünschten Eigenschaften optional unterhalb der Schmelztemperatur axial oder biaxial gestreckt und/oder mit einer Beschichtung beschichtet werden. Insbesondere kann eine Barriereschicht, beispielsweise aus Siliziumoxid, Aluminiumoxid, EVOH, PVOH oder Acrylaten und/oder eine Druckfarbe und/oder eine Primer aufgebracht werden.

Die wenigstens zwei Monomaterial-Schichten unterscheiden sich vorzugsweise hinsichtlich des Schmelzpunkts um 5 bis 90 K, bevorzugt 10 bis 20 K. Ferner ist es bevorzugt, dass eine Schicht der wenigstens zwei Monomaterial-Schichten einen Schmelzpunkt von 100 bis 115 °C, bevorzugt 100 bis 105 °C und die andere Schicht einen Schmelzpunkt von 140 bis 170 °C, bevorzugt 140 bis 155 °C aufweist. Es ist auch möglich, zur Herstellung eines Monomaterial-Mehrschichtsystems Polyolefine mit einem identischen oder nahezu identischen Schmelzpunkt einzusetzen, wenn auf mindestens einer Seite des Monomaterial-Mehrschichtsystems eine Siegelschicht vorhanden ist. Schmelzpunkt und Schmelztemperatur werden hier synonym verwendet. Die Schmelztemperaturen werden bestimmt mittels DSC (differential scanning calometry) bei einer Aufheizrate von 20 K/min gemäß DIN EN ISO 11357-1:2017 (2017-02) und Normteil 11357-2.

Es ist bevorzugt, dass das Polyolefin der Monomaterial-Schichten aus der Gruppe ausgewählt ist, umfassend oder bestehend aus Polyethylen, Polypropylen oder Mischungen davon. Die Polyolefine können beispielsweise aus Alkenen wie Ethylen, Propylen, 1-Buten und/oder Isobuten durch Kettenpolymerisation hergestellt werden. Bevorzugt werden als Monomere Ethylen und/oder Propylen bei der Herstellung der Polyolefine eingesetzt.

Bevorzugt eingesetzt werden Monomaterial-Schichten, die im Wesentlichen aus Polypropylen (beispielsweise BOPP (biaxially oriented polypropylene)) und/oder Polyethylen, (beispielsweise BOPE (biaxially oriented polyethylene)) bestehen. Ganz besonders bevorzugt werden Monomaterialschichten eingesetzt, die aus Polyethylen, insbesondere aus BOPE (biaxially oriented polyethylen), bestehen. Vorzugsweise bestehen die Monomaterial-Schichtsysteme aus zwei Monomaterial-Schichten, die größtenteils aus Polyethylen aufgebaut sind oder aus zwei Monomaterial-Schichten, die größtenteils aus Polypropylen aufgebaut sind. In einer weiteren bevorzugten Ausführungsform bestehen die Monomaterial-Schichtsysteme jeweils aus einer Monomaterial-Schicht, die größtenteils aus Polyethylen aufgebaut ist und einer Monomaterial-Schicht, die größtenteils aus Polypropylen aufgebaut ist.

Der Zweikomponentenklebstoff umfasst mindestens eine Isocyanat-reaktive Komponente sowie mindestens eine Isocyanat-Komponente. Der Zweikomponentenklebstoff wird folgend auch 2K-Klebstotff oder 2K-Polyurethanklebstoff genannt. Der Anteil des Zweikomponentenklebstoffs beträgt 0,70 bis 20,0 Gew.-%, bevorzugt 0,70 bis 10,0 Gew.-%, weiter bevorzugt 1,0 bis 5,0 Gew.-%, bezogen auf das Gesamtgewicht des Monomaterial-Mehrschichtsystems. Vorzugsweise enthält der Zweikomponentenklebstoff zudem organische Lösungsmittel, Katalysatoren, Füllstoffe, Prozesshilfsmittel, Haftvermittler, insbesondere Silane, Stabilisatoren, insbesondere Antioxidantien oder Mischungen davon. Es ist weiter bevorzugt, dass der Zweikomponentenklebstoff ein stöchiometrisches Verhältnis von Isocyanatgruppen zu Isocyanat-reaktiven Gruppen zwischen 0,8:1 bis 2:1, bevorzugt von 1,1:1 bis 1,5:1, besonders bevorzugt zwischen 1,1:1 bis 1,4, ganz besonders bevorzugt 1,1 bis 1,2 aufweist. Die Komponenten des Zweikomponentenklebstoff werden bevorzugt vor der Applikation auf ein Substrat vermischt oder anderweitig innig in Kontakt gebracht. Gegebenenfalls werden eine oder beide Monomaterial-Schichten, die mit dem Klebstoff mittelbar oder unmittelbar in Kontakt kommen vor dem Auftragen des Klebstoffes und/oder dem in Kontaktbringen mit der aufgetragenen Klebstoffschicht einer Corona-Vorbehandlung unterzogen, um die Oberflächenenergie zu erhöhen.

Die Herstellung von 2K-Polyurethanklebstoffen ist dem Fachmann grundsätzlich bekannt. Chemischer Aufbau und Formulierung sowie die Verarbeitung, insbesondere im Falle von 2K-Polyurethanklebstoffen zur Herstellung von Verbundfolien bzw. Mehrschichtverbundfolien sind in Ulrich Meier-Westhues, Polyurethane - Lacke, Kleb- und Dichtstoffe, Hannover: Vincenz Network 2007, Kapitel 6, bspw. auf Seiten 247-253 beschrieben.

Unter der durchschnittlichen Funktionalität einer Verbindung ist, wenn nicht anders beschrieben die mittlere Anzahl an isocyanatfunktionellen Gruppen bzw. Isocyanatgruppen pro Molekül zu verstehen. Bei nicht definierten bzw. einheitlich zusammengesetzten Verbindungen wie beispielsweise Oligomeren oder Polymeren stehen dem Fachmann verschiedene Methoden zur Ermittlung der mittleren Funktionalität zur Verfügung. Beispielsweise lässt sich aus dem Isocyanat-Gehalt und dem beispielsweise durch Gelpermeationschromatographie (GPC) oder Dampfdruckosmose ermittelten zahlenmittleren Molekulargewicht eine mittlere Funktionalität berechnen. Analog kann bei den isocyanatreaktiven Verbindungen vorgegangen werden. Die mittlere OH-Funktionalität einer Verbindung beispielsweise kann auf Basis des zahlenmittleren Molekulargewichts und der Hydroxylzahl berechnet werden. Die Hydroxylzahl (OH-Zahl) einer Verbindung wird, wenn nicht anders angegeben, gemäß DIN EN ISO 4629-2 bestimmt, wobei N-Methylpyrroldion durch Pyridin ersetzt wird.

Die Isocyanat-reaktive Komponente und/oder die Isocyanat-Komponente des Zweikomponentenklebstoffs enthält [CH₂-O]ₙ-Einheiten und der ausgehärtete Zweikomponentenklebstoff weist einen Anteil von 7,0 bis 25,0 Gew.-% an [CH₂-O]ₙ-Einheiten auf, bezogen auf das Gesamtgewicht des Klebstoffs, wobei n eine Zahl von 2 bis 50, bevorzugt von 8 bis 20 ist. Dabei ist es bevorzugt, dass entweder die Isocyanat-reaktive Komponente oder die Isocyanat-Komponente ein mittleres Molekulargewicht Mn von < 1000 g/mol sowie eine durchschnittliche Funktionalität von > 2 (auch "Vernetzerkomponente" genannt) und die jeweils andere Komponente ein mittleres Molekulargewicht Mn von > 1000 g/mol sowie eine Funktionalität von < 4 (auch "Präpolymerkomponente" genannt) aufweist. Mit anderen Worten handelt es sich entweder bevorzugt bei der Isocyanat-reaktiven Komponente um eine Vernetzerkomponente und bei der Isocyanat-Komponente um eine Präpolymerkomponente oder es handelt sich bevorzugt bei der Isocyanat-reaktiven Komponente um eine Präpolymerkomponente und bei der Isocyanat-Komponente um eine Vernetzerkomponente. Es ist ebenfalls möglich für beide Komponenten eine Präpolymerkomponente einzusetzen, jedoch weniger bevorzugt, da der Aufbau des Molekulargewichtes im Allgemeinen weniger zügig einsetzt und der Aufbau der Verbundfestigkeit verzögert ist. Dies führt bei der Herstellung von Verbundfolien zu Problemen wie dem bekannten Phänomen des "Teleskopieren" der Folienrolle unter Zugspannung beim Aufspulen.

Wenn nicht anders beschrieben, wird das zahlenmittlere Molekulargewicht Mn sowie das das gewichtsmittlere Molekulargewicht Mw nach DIN 55672-1 "Gelpermeationschromatographie, Teil I - Tetrahydrofuran als Elutionsmittel" ermittelt.

Unter "isocyanatreaktiven Gruppen" werden im Rahmen der vorliegenden Erfindung funktionelle Gruppen verstanden, die mit Isocyanatgruppen (-N=C=O) bei Temperaturen bis 200° C und ggf. unter Katalysatorzugabe unter Ausbildung mindestens einer kovalenten Bindung reagieren können. Isocyanat-reaktive Verbindungen sind beispielsweise Verbindungen mit aktiven Wasserstoffatomen. Beispiele für solche Verbindungen sind Wasser, Alkohole, primäre und sekundäre Amine, Thiole und Carbonsäuren. Verbindungen die kein aktives Wasserstoffatom enthalten aber dennoch Isocyanat-reaktiv sind, sind beispielsweise Epoxide, Oxime, Kohlendioxid und Carbonsäureanhydride. Geeignete reaktionsfähige funktionelle Gruppen können im Sinne einer Reaktion mit Isocyanaten monofunktionell sein, beispielsweise OH-Gruppen oder Mercaptogruppen. Sie können jedoch auch gegenüber Isocyanaten difunktionell sein, beispielsweise Aminogruppen. Ein Molekül mit einer Aminogruppe weist demnach auch zwei gegenüber Isocyanatgruppen reaktionsfähige funktionelle Gruppen auf. Es ist in diesem Zusammenhang nicht notwendig, dass ein einziges Molekül zwei getrennte, gegenüber Isocyanatgruppen reaktionsfähige funktionelle Gruppen aufweist - entscheidend ist, dass das Molekül mit zwei Isocyanatgruppen unter Ausbildung jeweils einer kovalenten Bindung eine Verbindung eingehen kann. Beispiele für Strukturmerkmale, die durch Reaktion von Isocyanatgruppen mit Isocyanat-reaktiven Verbindungen erzeugt werden sind Urethan-, Allophanat-, Biuret-, Harnstoff-, Thiourethan-, Amid-, Imid-, Acylharnstoff-, Oxazolidion,- Carbamat-, Oxadiazinetrion. Beispiele für Stukturmerkmale, die durch Reaktion von wenigstens zwei Isocyanatgruppen gebildet werden sind Uretdion, Isocyanurat, Carbodiimid. Zur Bildung dieser Gruppen werden in der Regel Katalysatoren eingesetzt. Beispiele für geeignete Katalysatoren werden im Kapitel XII. Summary of Catalytic Effects High Polymers Vol. XVI Polyurethanes: Chemistry and Technology, Part 1. Chemistry J.H. Saunders and K.C. Frisch, John Wiley & Sons (Library of Congress Catalog Card Number 62-18932) aufgeführt.

Es ist bevorzugt, dass die Isocyanat-reaktive Komponente des Zweikomponentenklebstoffs Polyole, insbesondere Polyesterpolyole, Polyetherpolyole, hydroxylgruppenhaltige Polyoxymethylen-Polyoxyalkylen-Copolymere, hydroxylgruppenhaltige Umsetzungsprodukte von hydroxylgruppenhaltigen Polyoxymethylen-Polyoxyalkylen-Copolymeren und Diisocyanaten oder Mischungen der vorgenannten Verbindungen umfasst oder daraus besteht. Unter einem Polyol wird ein polyfunktioneller Alkohol verstanden d.h. eine Verbindung mit mehr als einer OH-Gruppe im Molekül.

Wenn die Isocyanat-reaktive Komponente [CH₂-O]ₙ-Einheiten aufweist, handelt es sich dabei vorzugsweise um Polyole mit einer OH-Funktionalität zwischen 1 und 4 und einer OH-Zahl von 5 mg KOH/g bis 900 mg KOH/g wie insbesondere hydroxylgruppenhaltigen Polyoxymethylen-Polyoxyalkylen-Copolymeren. Solche Polyole sind über verschiedene, dem Fachmann bekannte Wege zugänglich: Beispielweise werden in der WO 2004/096746 A1 isocyanatreaktive Diole mit OH-Zahlen von 685 und 868 mg KOH/g auf Polyoxymethylen (POM) Basis experimentell beschrieben, die durch Umsetzung mit Polyisocyanaten zu isocyanatreaktiven Gruppen mit geringerer OH-Zahl umgesetzt werden können. Weitere mögliche Ausgangsverbindungen lassen sich nach EP 3 922 661 A1 herstellen, indem man eine polymeren Formaldehydverbindung mit einem Alkylenoxid und einem Polyol in Gegenwart eines Gegenwart eines Doppelmetallcyanid (DMC)-Katalysators umsetzt. US 3754053 beschreibt Polyoxymethylen-Polyoxyalkylen-Copolymere mit einem Molekulargewicht von >10.000 g/mol ausgehend von Trioxan. WO2021122402A1 lehrt die Herstellung von Polyoxymethylen- Polyoxyalkylen-Copolymers umfassend der Reaktion einer polymeren Formaldehydverbindung mit einem Alkylenoxid in Gegenwart eines Doppelmetallcyanid (DMC)-Katalysators, wobei die polymere Formaldehydverbindung wenigstens eine terminale Hydroxylgruppe aufweist und wobei das Verfahren die Schritte des Vorlegens eines Suspensionsmittels in einem Reaktor und nachfolgende stufenweise oder kontinuierliche Zudosierung der polymeren Formaldehydverbindung während der Reaktion in den Reaktor umfasst. Weitere mögliche Ausgangsverbindungen sind in WO2015/155094A1, WO2012/091968, EP 1870425A1, JP 2007211082 beschrieben. Urethangruppen aufweisende und [CH₂-O-]ₙ-Einheiten enthaltende Polyole mit einem Molgewicht Mw von >1000 bis 30.000 werden ebenfalls bevorzugt eingesetzt. Diese lassen sich zum Beispiel durch Reaktion von Diisocyanaten mit [CH₂-O-]ₙ-Einheiten enthaltenden Polyolen erhalten, indem ein stoichiometrischer Überschuss von Hydroxylgruppen gegenüber von Isocyanatgruppen eingesetzt wird. Als besonders bevorzugte Diisocyanate werden bei dieser Reaktion 1,5-Diisocyanatopentan (PDI), 1,6-Diisocyanatohexan (HDI), 1-Isocyanato-3,3,5-trimethyl-5-isocyanatomethylcyclohexan (Isophorondiisocyanat, IPDI), 2,4'- und 4,4'-Diisocyanatodiphenylmethan (MDI) 2,4- und 2,6-Diisocyanatotoluol (TDI) eingesetzt. Das stoichiometrische Verhältnis von Isocyanatgruppen zu Hydroxylgruppen beträgt dabei bevorzugt zwischen 1 zu 10 und 9,5 zu 10.

Die Isocyanat-reaktive Komponente kann nur ein Polyol enthalten, es kann jedoch auch ein Gemisch aus zwei oder mehreren Polyolen als Polyolkomponente eingesetzt werden. Es können ferner auch Gemische von [CH₂-O-]ₙ-Einheiten enthaltenden Polyolen zum Einsatz kommen, gegebenenfalls auch neben anderen Verbindungen mit isocyanatreaktiven Gruppen welche keine [CH₂-O-]ₙ Einheiten enthalten.

In einer besonderen Ausführungsform der Erfindung handelt es sich bei der Isocyanat-reaktiven Komponente um Wasser (H₂O), oder die Isocyanat-reaktive Komponente enthält Wasser. Obwohl ein Wassermolekül nur eine Hydroxylgruppe enthält, kann es mit zwei NCO-Gruppen umgesetzt werden, da nach der Reaktion mit einer Isocyanatgruppe unter Kohlendioxidabspaltung eine Amingruppe entsteht, die wiederum mit einer oder mehreren weiteren Isocyanatgruppen reagieren kann. In einer besonderen Ausführungsform wird die Isocyanat-reaktive Komponente also nicht vor der Applikation des Klebstoffes mit der B-Komponente vermischt, sondern tritt, z.B. als Luftfeuchtigkeit durch Diffusion nach dem Fügen der beiden Substrate durch ein Substrat mit entsprechender Wasserdampfdurchlässigkeit zu.

Bei der im erfindungsgemäßen Verfahren einzusetzenden [CH₂-O-]ₙ Einheiten enthaltenden Verbindungen handelt es sich bevorzugt um Polyoxymethylen-Polyoxyalkylen-Copolymere und daraus abgeleiteten Prepolymeren und weiteren Derivaten. Polyoxymethylen-Polyoxyalkylen-Copolymere im Sinne der Erfindung bezeichnen polymere Verbindungen, die mindestens einen Polyoxymethylen-Block sowie mindestens einen zusätzlichen Polyoxyalkylen-Block enthalten und vorzugsweise ein im vierstelligen Bereich liegendes Molekulargewicht nicht überschreiten. Die in dem erfindungsgemäßen Verfahren eingesetzten Polyoxymethylen-Polyoxyalkylen-Copolymere werden bevorzugt durch katalytische Anlagerung von Alkylenoxiden sowie gegebenenfalls weiteren Co-Monomeren an wenigstens eine polymere Formaldehyd-Starterverbindung, welche wenigstens eine terminale Hydroxylgruppe aufweist, in Gegenwart eines Doppelmetallcyanid (DMC)-Katalysators hergestellt, wie dies in WO2022049012 A1, Seite 5 Zeile 28 bis Seite 13, Zeile 3 beschrieben wird. Ganz besonders bevorzugt werden als Polyole die [CH₂-O-]ₙ Einheiten enthalten, und als Bestandteil der Isocyanat-reaktiven Komponente als solche oder als Aufbaukomponente für Verbindungen die in der Isocyanat-reaktiven Komponente und/oder in der Isocyanat-Komponente verwendet werden, im Sinne dieser Erfindung Polyoxymethylen-Polyoxyalkylen-Copolymere mit einer Hydroxylzahl gemäß DIN EN ISO 4629-2 von 5 mg KOH/g bis 200 mg KOH/g und einer durchschnittlichen Funktionalität von 1,6 bis 4 eingesetzt.

Hinsichtlich der Isocyanat-Komponente des Zweikomponentenklebstoffs ist bevorzugt, dass diese
- monomere Polyisocyanate, insbesondere Hexamethylen-1,6-diisocyanat, Pentamethylen-1,5-diisocyanat, 1,4-Butandiisocyanat, Isophorondiisocyanat, IsToluol-2,4-diisocyanat, Toluol-2,6-diisocyanat, Diphenylmethan-2,2'-diisocyanat, Diphenylmethan-2,4'-diisocyanat, Diphenylmethan-4,4'-diisocyanat oder Mischungen davon;
- oligomere Polyisocyanate, welche aus mindestens zwei monomeren Polyisocyanaten hergestellt werden;
- Isocyanat-terminierte Präpolymere, welche durch Umsetzung von monomeren und/oder oligomeren Polyisocyanaten und Isocyanat-reaktiven Verbindungen mit > 1 Isocyanat-reaktiven Gruppen pro Moleküle hergestellt werden, wobei die Isocyanat-reaktive Verbindung bevorzugt Polyole, weiter bevorzugt hydroxylgruppenhaltige Polyoxymethylen-Polyoxyalkylen-Copolymere, Polyacrylate, Polycarbonate, Polyester, Polyurethane und/oder Polyether umfasst oder daraus besteht;
- oder Mischungen der vorgenannten Verbindungen
umfasst oder daraus besteht, wobei die Isocyanat-terminierten Präpolymere vorzugsweise [CH₂-O]ₙ-Einheiten wie weiter oben definiert aufweisen.

Wenn die Isocyanat-Komponente [CH₂-O]ₙ-Einheiten aufweist, wird diese vorzugsweise durch dem Fachmann bekannten Methoden hergestellt, beispielsweise durch Reaktion von Verbindungen, die [CH₂-O-]ₙ-Einheiten enthalten und in der Isocyanat-reaktiven Komponente des Zweikomponentenklebstoffs Einsatz finden können mit einem Überschuss an Polyisocyanat zu Isocyanat-terminierten Verbindungen mit [CH₂-O]ₙ-Einheiten. Beispielsweise können als Isocyanat-Komponente Isocyanat-terminierten Präpolymere eingesetzt werden, deren Herstellung auf Basis von Polyoxymethylen-Polyoxyalkylen-Copolymeren erfolgt (beispielsweise in EP3960783A1 beschrieben). Der Einsatz eines aminogruppenhaltigen Polyethers ist möglich, aber nicht zwingend. Des Weiteren können beispielweise die in der WO 2004/096746 A1 beschriebenen isocyanatreaktiven Diole auf Polyoxymethylen (POM) Basis, beispielsweise solche mit OH-Zahlen von 685 und 868 mg KOH/g, die durch Reaktion mit Polyisocyanaten zu Isocyanatgruppen enthaltenden Verbindungen umgesetzt werden können, eingesetzt werden. Ebenfalls eingesetzt werden können die in WO 2014/095679 offenbarten NCOmodifizierten Polyoxymethylen-Copolymere. Alle reaktiven Verbindungen, die die Isocyanat-reaktive Verbindung des Zweikomponentenklebstoffs enthält, können [CH₂-O-]ₙ Einheiten enthalten oder es können neben den reaktiven Verbindungen, die [CH₂-O-]ₙ Einheiten enthalten auch noch Verbindungen enthalten sein, die keine [CH₂-O-]ₙ Einheiten enthalten. Die Isocyanat-reaktive Verbindung kann aber auch ausschließlich aus reaktiven Verbindungen bestehen, die keine [CH₂-O-]ₙ Einheiten enthalten, wenn Verbindungen, [CH₂-O-]ₙ Einheiten enthalten, in der Isocyanat-reaktiven Verbindung vorhanden sind.

Der Begriff "Polyisocyanat", wie hier verwendet, ist eine Sammelbezeichnung für Verbindungen, die im Molekül zwei oder mehrere Isocyanatgruppen (hierunter versteht der Fachmann freie Isocyanat-Gruppen der allgemeinen Struktur -N=C=O) enthalten. Einfachste und wichtigste Vertreter dieser Polyisocyanate sind die Diisocyanate. Diese haben die allgemeinen Struktur O=C=N-R-N=C=O, wobei R üblicherweise für aliphatische, cycloaliphatische, und/oder aromatische Reste steht.

Der Begriff "Polyisocyanate" bezeichnet in dieser Anmeldung also monomere und oligomere Polyisocyanate gleichermaßen. Wenn in dieser Anmeldung von "oligomeren Polyisocyanaten" die Rede ist, dann sind damit Polyisocyanate gemeint, die aus mindestens zwei monomeren Polyisocyanatmolekülen aufgebaut sind, d.h. es sind Verbindungen, die ein Reaktionsprodukt aus mindestens zwei monomeren Polyisocyanatmolekülen darstellen oder enthalten. Bevorzugt sind besagte monomere Polyisocyanate Diisocyanate, d.h. monomere Isocyanate mit zwei Isocyanatgruppen pro Molekül. In Abgrenzung von den weiter unten in dieser Anmeldung definierten isocyanatterminierten Präpolymeren sind oligomere Polyisocyanate durch ein Molekulargewicht von höchstens 900 g/Mol, bevorzugt höchstens 800 g/Mol und besonders bevorzugt höchstens 700 g/Mol charakterisiert.

Die oligomeren Polyisocyanate können erfindungsgemäß insbesondere Uretdion-, Isocyanurat-, Allophanat-, Biuret-, Iminooxadiazindion- und/oder Oxadiazintrionstruktur aufweisen. Gemäß einer Ausführungsform der Erfindung weisen die oligomeren Polyisocyanate mindestens eine der folgenden oligomeren Strukturtypen oder deren Gemische auf:

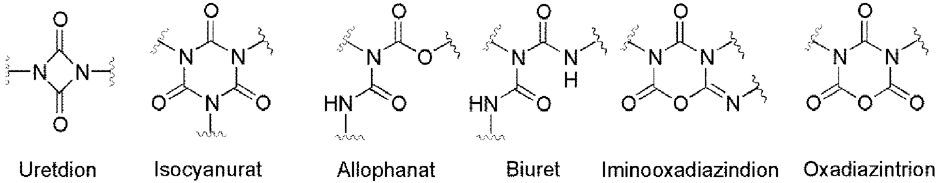

Herstellverfahren für die erfindungsgemäß einzusetzenden oligomeren Polyisocyanate mit Uretdion-, Isocyanurat-, Allophanat-, Biuret-, Iminooxadiazindion- und/oder Oxadiazintrionstruktur sind beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP A 0 339 396 und EP-A 0 798 299 beschrieben.

Bei einem Isocyanat mit aliphatisch gebundenen Isocyanatgruppen sind alle Isocyanatgruppen an ein sp³-hybridisiertes Kohlenstoffatom gebunden. Bevorzugte Polyisocyanate mit aliphatisch gebundenen Isocyanatgruppen sind n-Butylisocyanat und alle Isomeren davon, n-Pentylisocyanat und alle Isomeren davon, n-Hexylisocyanat und alle Isomeren davon, 1,4-Butyldiisocyanat, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan 1,10-Diisocyanatodecan, und Triisocyantononan.

Bei einem Isocyanat mit cycloaliphatisch gebundenen Isocyanatgruppen sind alle Isocyanatgruppen an Kohlenstoffatome gebunden, die Teil eines geschlossenen Rings aus Kohlenstoffatomen sind. Dieser Ring kann an einer oder mehreren Stellen ungesättigt sein, solange er durch das Vorliegen von Doppelbindungen keinen aromatischen Charakter erhält. Bevorzugte Polyisocyanate mit cycloaliphatisch gebundenen Isocyanatgruppen sind Cyclohexylisocyanat, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan Isophorondiisocyanat; (IPDI), 1-Isocyanato-1-methyl-4(3)-isocyanatomethylcyclohexan, 2,4'- und 4,4'-Diisocyanatodicyclohexylmethan(H12MDI), 1,3-und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyl-dicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan und 1,3-Dimethyl-5,7-diisocyanatoadamantan.

Bei einem Isocyanat mit araliphatisch gebundenen Isocyanatgruppen sind alle Isocyanat-gruppen an Alkylenreste gebunden, der ihrerseits an einen aromatischen Ring gebunden sind. Bevorzugte Polyisocyanate mit araliphatisch gebundenen Isocyanatgruppen sind 1,3- und 1,4-Bis-(isocyanatomethyl)benzol (Xylendiisocyanat; XDI), 1,3- und 1,4-Bis(1-isocyanato-1-methylethyl)-benzol (TMXDI) und Bis(4-(1-isocyanato-1-methylethyl)phenyl)-carbonat.

Bei einem Isocyanat mit aromatisch gebundener Isocyanatgruppe sind alle Isocyanatgruppen direkt an Kohlenstoffatome gebunden, die Teil eines aromatischen Ringes sind. Bevorzugte Isocyanate mit aromatisch gebundenen Isocyanatgruppen sind 2,4- und 2,6-Diisocyanatotoluol (TDI), 2,4'- und 4,4'-Diisocyanatodiphenylmethan (MDI), 1,5-Diisocyanatonaphthalin, Tris-(p-isocyanatophenyl)-thiophosphat und Triphenylmethan-4,4',4"-Triisocyanat.

Isocyanat-terminierte Präpolymere werden durch Umsetzung von monomeren oder oligomeren Polyisocyanaten mit Verbindungen erhalten, die im Durchschnitt mehr als eine isocyanatreaktive Gruppe pro Molekül enthalten, wobei im Reaktionsgemisch ein molarer Überschuss an Isocyanatgruppen gegenüber den isocyanatreaktiven Gruppen vorliegt. Bevorzugt handelt es sich bei den Verbindungen, die im Durchschnitt mehr als eine isocyanatreaktive Gruppe pro Molekül enthalten um Polyole und/oder Polyamine, wobei im Reaktionsgemisch ein molarer Überschuss an Isocyanatgruppen gegenüber Amino- und Hydroxylgruppen vorliegt. Entsprechende Herstellungsverfahren sind dem Fachmann gut bekannt.

Die erfindungsgemäß einzusetzenden 2K-Polyurethanklebstoffe lassen sich zu einem signifikanten Teil ausgehend von nachwachsenden Rohstoffen (Biomethanol) herstellen. In diesem Fall werden beispielsweise Diisocyanate mit einem Anteil aus biobasiertem Kohlenstoff eingesetzt, beispielsweise wird Pentamethlyendiisocyanat hergestellt aus biobasiertem Cadaverin, Hexamethlendiisocyanat basierend auf biobasierendem Hexamethylendiamin, Methylendiisocyanat hergestellt auf biobasierendem Anilin und/oder Isophorondiisocyanat hergestellt aus biobasiertem Aceton oder aus diesen Verbindungen aufgebaute Derivate, Oligomere und/oder Prepolymere eingesetzt.

Die entsprechenden genannten Diamine sind über enzymatische Umwandlungen beispielsweise aus Zucker oder Stärkeverbindungen zugänglich,

Außerdem werden bevorzugt [CH₂-O-]ₙ Einheiten hergestellt unter Verwendung von Formaldehyd hergestellt aus Bio-Methanol eingesetzt.

Die Erfindung betrifft ferner die Verwendung eines erfindungsgemäßen Zweikompontenklebstoffs in Monomaterial-Mehrschichtsystemen, insbesondere zur Verbesserung der Recyclingfähigkeit von Monomaterial-Mehrschichtsystemen, wobei das Material der Monomaterial-Schichten Polyolefine mit einem Anteil von 80,0 bis 99,3 Gew.-% umfasst, bezogen auf das Gesamtgewicht des Monomaterial-Mehrschichtsystems.

Die Erfindung betrifft ferner auch Monomaterial-Mehrschichtsysteme, insbesondere recyclefähige Monomaterial-Mehrschichtsysteme, welche durch das erfindungsgemäße Verfahren erhalten werden oder erhältlich sind. Die erfindungsgemäßen Monomaterial-Mehrschichtsysteme lassen sich dabei unter anderem als, vorzugsweise recyclefähiges, Verpackungsmaterial, insbesondere Verpackungsmaterial für Lebensmittel einsetzen.

Da sich die erfindungsgemäßen Monomaterial-Mehrschichtsystem zur Herstellung von hochwertigen Rezyklaten eignen, betrifft die Erfindung folglich auch ein Verfahren zur Gewinnung eines Rezyklats aus Monomaterial-Mehrschichtsystem-haltigem Abfall, welcher ein erfindungsgemäßes Monomaterial-Mehrschichtsystem enthält, wobei die Gewinnung die folgenden Schritte umfasst:
i. Zerkleinerung, Waschen und optional Sterilisation des Monomaterial-Mehrschichtsystem-haltigen Abfalls unter Erhalt einer Materialmischung;
ii. Optional Sortierung der Materialmischung;
iii. Optional Mischen der Materialmischung mit weiteren Bestandteilen, insbesondere mit Polyolefinen;
iv. Weitere Aufarbeitung, insbesondere Schmelzen und Extrudieren, der Materialmischung unter Erhalt des Rezyklats.

Bei diesem Verfahren handelt es sich also um ein mechanisches Recyclingverfahren. Es können dabei neben den erfindungsgemäßen auch nicht erfindungsgemäße Monomaterial-Mehrschichtsysteme, insbesondere recyclebare Monomaterial-Mehrschichtsysteme, sowie weitere Zuschlagstoffe (weitere Bestandteile) wie synthetisch hergestelltes bzw. nicht wiederverwendetes PE oder PO Granulat (sogenannte "Virgin" Materialien bzw. "Virgin-Polyolefine") eingesetzt werden.

Unter Rezyklat im Sinne der Erfindung versteht man also ein Produkt, welches zumindest nach Zerkleinerung und Waschen des Monomaterial-Mehrschichtsystem-haltigen Abfalls und weiterer Aufarbeitung erhalten wird. Bevorzugt beinhaltet die weitere Aufarbeitung einen Extrusionsprozess, wobei das Rezyklat dann z.B. in Granulat- oder Strangform erhalten werden kann. Das Rezyklat umfasst mindestens ein Polyolefin und mindestens einen 2K-Polyurethanklebstoff in ausgehärteter Form.

Ein homogenes Rezyklat wird, beispielsweise nach Aufschmelzen und Extrudieren, insbesondere dann erzeugt, wenn von 7,0 bis 25,0 Gew.-% [CH₂-O-]ₙ Einheiten, bevorzugt von 9,0 bis 20,0 Gew.-% [CH₂-O-]ₙ Einheiten, besonders bevorzugt von 15,0 bis 18,0 Gew.-% [CH₂-O-]ₙ Einheiten im ausgehärteten Zweikomponentenklebstoff enthalten sind.

Die erfindungsgemäßen Rezyklate können zur Herstellung von Folien oder anderen Formteilen eingesetzt werden, gegebenenfalls unter Zugabe von (weiteren) Virgin-Polyolefinen. Folglich betrifft die Erfindung auch Formteile und Folien erhalten oder erhältlich durch die Verarbeitung eines gemäß dem erfindungsgemäßen Recyclingverfahrens erhaltenen oder erhältlichen Rezyklats.

### Ausführungsformen:

Die Erfindung betrifft insbesondere folgende Ausführungsformen:
Nach einer ersten Ausführungsform betrifft die Erfindung ein Verfahren zur Herstellung eines Monomaterial-Mehrschichtsystems, insbesondere eines recyclefähigen Monomaterial-Mehrschichtsystems, wobei das Verfahren die folgenden Schritte umfasst oder daraus besteht:
   I) Bereitstellen von wenigstens zwei Monomaterial-Schichten;
   II) Auftragen eines Zweikomponentenklebstoffs mittelbar oder unmittelbar auf wenigstens eine der beiden bereitgestellten Monomaterial-Schichten, wobei der Zweikomponentenklebstoff mindestens eine Isocyanat-reaktive Komponente sowie mindestens eine Isocyanat-Komponente umfasst;
   III) Verbinden der Monomaterial-Schichten mittels des Zweikomponentenklebstoffs sowie Aushärten des Zweikomponentenklebstoffs unter Erhalt des Monomaterial-Mehrschichtsystems;

   dadurch gekennzeichnet, dass das Material der Monomaterial-Schichten Polyolefine umfasst und der Anteil des Polyolefins von 80,0 bis 99,30 Gew.-% beträgt, bezogen auf das Gesamtgewicht des Monomaterial-Mehrschichtsystems,
   der Anteil des Zweikomponentenklebstoffs 0,70 bis 20,0 Gew.-% beträgt, bezogen auf das Gesamtgewicht des Monomaterial-Mehrschichtsystems,
   die Isocyanat-reaktive Komponente und/oder die Isocyanat-Komponente [CH₂-O]ₙ-Einheiten enthält und
   der ausgehärtete Zweikomponentenklebstoff einen Anteil von 7,0 bis 25,0 Gew.-% an [CH₂-O]ₙ-Einheiten aufweist, bezogen auf das Gesamtgewicht des Klebstoffs, wobei n eine Zahl von 2 bis 50 ist.
Nach einer zweiten Ausführungsform betrifft die Erfindung ein Verfahren nach der ersten Ausführungsform, dadurch gekennzeichnet, dass die Isocyanat-reaktive Komponente des Zweikomponentenklebstoffs Polyole, insbesondere Polyesterpolyole, Polyetherpolyole, hydroxylgruppenhaltige Polyoxymethylen-Polyoxyalkylen-Copolymere, hydroxylgruppenhaltige Umsetzungsprodukte von hydroxylgruppenhaltigen Polyoxymethylen-Polyoxyalkylen-Copolymeren und Diisocyanaten oder Mischungen der vorgenannten Verbindungen umfasst oder daraus besteht.
Nach einer dritten Ausführungsform betrifft die Erfindung ein Verfahren nach der ersten oder zweiten Ausführungsform, dadurch gekennzeichnet, dass die Isocyanat-Komponente des Zweikomponentenklebstoffs
   - monomere Polyisocyanate, insbesondere Hexamethylen-1,6-diisocyanat, Pentamethylen-1,5-diisocyanat, 1,4-Butandiisocyanat, Isophorondiisocyanat, IsToluol-2,4-diisocyanat, Toluol-2,6-diisocyanat, Diphenylmethan-2,2'-diisocyanat, Diphenylmethan-2,4'-diisocyanat, Diphenylmethan-4,4'-diisocyanat oder Mischungen davon;
   - oligomere Polyisocyanate, welche aus mindestens zwei monomeren Polyisocyanaten hergestellt werden;
   - Isocyanat-terminierte Präpolymere, welche durch Umsetzung von monomeren und/oder oligomeren Polyisocyanaten und Isocyanat-reaktiven Verbindungen mit > 1 Isocyanat-reaktiven Gruppen pro Moleküle hergestellt werden, wobei die Isocyanat-reaktive Verbindung bevorzugt Polyole, weiter bevorzugt hydroxylgruppenhaltige Polyoxymethylen-Polyoxyalkylen-Copolymere, Polyacrylate, Polycarbonate, Polyester, Polyurethane und/oder Polyether umfasst oder daraus besteht;
   - oder Mischungen der vorgenannten Verbindungen
   umfasst oder daraus besteht, wobei die Isocyanat-terminierten Präpolymere vorzugsweise [CH₂-O]ₙ-Einheiten wie in Ausführungsform 1 definiert aufweisen.
Nach einer vierten Ausführungsform betrifft die Erfindung ein Verfahren nach einer der vorstehenden Ausführungsformen, dadurch gekennzeichnet, dass das n der [CH₂-O]ₙ-Einheiten eine Zahl von 8 bis 20 ist.
Nach einer fünften Ausführungsform betrifft die Erfindung ein Verfahren nach einer der vorstehenden Ausführungsformen, dadurch gekennzeichnet, dass der Zweikomponentenklebstoff zudem organische Lösungsmittel, Katalysatoren, Füllstoffe, Prozesshilfsmittel, Haftvermittler, insbesondere Silane, Stabilisatoren, insbesondere Antioxidantien oder Mischungen davon enthält.
Nach einer sechsten Ausführungsform betrifft die Erfindung ein Verfahren nach einer der vorstehenden Ausführungsformen, dadurch gekennzeichnet, dass entweder die Isocyanat-reaktive Komponente oder die Isocyanat-Komponente ein mittleres Molekulargewicht Mn von < 1000 g/mol sowie eine durchschnittliche Funktionalität von > 2 und die jeweils andere Komponente ein mittleres Molekulargewicht Mn von > 1000 g/mol sowie eine Funktionalität von < 4 aufweist.
Nach einer siebten Ausführungsform betrifft die Erfindung ein Verfahren nach einer der vorstehenden Ausführungsformen, dadurch gekennzeichnet, dass der Zweikomponentenklebstoff ein stöchiometrisches Verhältnis von Isocyanatgruppen zu Isocyanatreaktiven Gruppen zwischen 0,8:1 bis 2:1 aufweist.
Nach einer achten Ausführungsform betrifft die Erfindung ein Verfahren nach einer der vorstehenden Ausführungsformen, dadurch gekennzeichnet, dass das Polyolefin der Monomaterial-Schichten aus der Gruppe ausgewählt ist, umfassend oder bestehend aus Polyethylen, Polypropylen oder Mischungen davon.
Nach einer neunten Ausführungsform betrifft die Erfindung ein Verfahren nach einer der vorstehenden Ausführungsformen, dadurch gekennzeichnet, dass der Anteil des Polyolefins von 95,0 bis 99,3 Gew.-% und/oder der Anteil des Zweikomponentenklebstoffs von 0,70 bis 10,0 Gew.-%, bevorzugt 1,0 bis 5,0 Gew.-% beträgt, jeweils bezogen auf das Gesamtgewicht des Monomaterial-Mehrschichtsystems.
Nach einer zehnten Ausführungsform betrifft die Erfindung ein Monomaterial-Mehrschichtsystem, insbesondere ein recyclefähiges Monomaterial-Mehrschichtsystem, erhalten oder erhältlich nach einem Verfahren gemäß einer der Ausführungsformen 1 bis 9.
Nach einer elften Ausführungsform betrifft die Erfindung die Verwendung eines Monomaterial-Mehrschichtsystems gemäß Ausführungsform 10 als, vorzugsweise recyclefähiges, Verpackungsmaterial, insbesondere Verpackungsmaterial für Lebensmittel.
Nach einer zwölften Ausführungsform betrifft die Erfindung die Verwendung eines Zweikomponentenklebstoffs definiert wie in einer der Ausführungsformen 1 bis 7 in Monomaterial-Mehrschichtsystemen, insbesondere zur Verbesserung der Recyclingfähigkeit von Monomaterial-Mehrschichtsystemen, wobei das Material der Monomaterial-Schichten Polyolefine mit einem Anteil von 80,0 bis 99,3 Gew.-% umfasst, bezogen auf das Gesamtgewicht des Monomaterial-Mehrschichtsystems.
Nach einer dreizehnten Ausführungsform betrifft die Erfindung ein Verfahren zur Gewinnung eines Rezyklats aus Monomaterial-Mehrschichtsystem-haltigem Abfall, welcher ein Monomaterial-Mehrschichtsystem gemäß Ausführungsform 10 enthält, wobei die Gewinnung die folgenden Schritte umfasst:
   i. Zerkleinerung, Waschen und optional Sterilisation des Monomaterial-Mehrschichtsystem-haltigen Abfalls unter Erhalt einer Materialmischung;
   ii. Optional Sortierung der Materialmischung;
   iii. Optional Mischen der Materialmischung mit weiteren Bestandteilen, insbesondere mit Polyolefinen;
   iv. Weitere Aufarbeitung, insbesondere Schmelzen und Extrudieren, der Materialmischung unter Erhalt des Rezyklats.
Nach einer vierzehnten Ausführungsform betrifft die Erfindung Formteile erhalten oder erhältlich durch die Verarbeitung eines gemäß dem Verfahren nach Ausführungsform 13 erhaltenen oder erhältlichen Rezyklats.

### Beispiele

Die vorliegende Erfindung wird im Folgenden anhand der nachfolgenden Beispiele näher erläutert.

### Messmethoden

- **Gel-Permeations-Chromatographie (GPC):** Das Gewichts- und Zahlenmittel des Molekulargewichts Mw und Mn der entstandenen Polymere wurde mittels Gel-Permeations-Chromatographie (GPC) bestimmt. Es wurde in Anlehnung an DIN 55672-1 vorgegangen: "Gelpermeationschromatographie, Teil I - Tetrahydrofuran als Elutionsmittel". Dabei wurden Polystyrolproben bekannter Molmasse zur Kalibrierung verwendet. Der Polydispersitätsindex (PDI) berechnet sich aus dem Quotienten des gewichtsmittleren und zahlenmittleren Molekulargewichtes.
- Die Hydroxylzahl (oder OH-Zahl) einer Verbindung wird, wenn nicht anders angegeben, nach DIN EN ISO 4629-2 ermittelt. N-Methylpyrrolidon wird in 5.1 und 5.5 jeweils durch Pyridin ersetzt, als Lösemittel für den Katalysator wird in 5.2 Ethanol statt Methanol verwendet.

### Materialien:

Es wurden die folgenden Rohstoffe und Materialien eingesetzt:

### Rohstoffe für die Herstellung von Polyoxymethylen-Polyalkylenoxid-Copolymeren

- Doppelmetallcyanid (DMC)-Katalysator, hergestellt gemäß Beispiel 6 in WO2001/80994 A1 enthaltend Zinkhexacyanocobaltat, tert-Butanol und Polypropylenglykol mi einem Mn von 1000 g/mol. cyclischesPropylencarbonat (cPC), CAS-Nr. 108-32-7, Merck
- Paraformaldehyd (pFA), Prefere Paraform GmbH&Co KG
- Propylenoxid (PO), Sigma-Aldrich

### Rohstoff zur Herstellung von Monomaterial-Schichten

- BorShape^{®} FX1001: Alpha-Olefin Terpolymer Polyethylen (Pellets)

### Monomaterial-Schichten

- Folie aus Cast-Polypropylen (CPP): Cast-Polypropylen Folie ohne Prägung PB81AB mit 50 µm Dicke; Hersteller: Profol GmbH, Materialnummer 15357005

### Isocyanat-reaktive Komponente

- Glycerin: Glycerin ist ein trifunktionelles niedermolekulares Polyol.
- Baycoll^{®} AD 2047: Baycoll^{®} AD 2047 ist ein lineares Polyesterpolyol mit OH-Funktionalität 2. Die Hydroxylzahl liegt bei ca. 55,0 mg KOH/g.
- Acclaim^{®} Polyol 18200 N: Acclaim^{®} Polyol 18200 N ist ein lineares Polypropylenetherpolyol mit OH-Funktionalität 2. Die Hydroxylzahl liegt bei ca. 6,0 mg KOH/g.
- Polyol 22: Lineares Polypropylenetherpolyol mit OH-Funktionalität 2. Die Hydroxylzahl liegt bei ca. 4,9 mg KOH/g.
- Beispiel1 - Herstellung eines Polyoxymethylen-Polyalkylenoxid-Copolymers mit DMC-Gesamtkatalysatorbeladung von 1000 ppm und kontinuierlicher pFA- und PO-Zugabe:
   In einem 1,0 L Druckreaktor wird 10 g vorbehandeltes pFA (Vorbehandlung: 50 °C, 5 mbar, 1,5 h) und 300 mg DMC-Katalysator in 150 g cPC suspendiert. Bei 60 °C wird für 30 min eine Inertisierung mit N2 (25 L/h) unter Rühren (500 rpm) bei 30 mbar durchgeführt. Die Suspension wird unter Rühren (1000 rpm) auf 70 °C erhitzt. Nach Erreichen der Reaktortemperatur wird zu der Suspension 20 g Propylenoxid (8,8 Gew.%) schnell zugegeben. Das Einsetzen der Reaktion machte sich durch eine Temperaturspitze ("Hotspot") verbunden mit gleichzeitigem Druckabfall bemerkbar. Anschließend wird die Reaktortemperatur auf 80°C erhöht, und die 208 g PO mit einer Dosierrate von 0,9 g/min und 62 g Paraformaldehyd (als 20 %-ige Suspension in cPC) mit einer Dosierrate von 1.7 g/min zugegeben. Nach beendeter Zugabe wird bis zum Abklingen der exothermen Reaktion bzw. bis zur Druckkonstanz bei 80 °C, nachgerührt. Anschließend wurde das Produktgemisch entnommen und am Rotationsverdampfer bei 60 °C und 10 mbar entgast. Das Suspensionsmittel cPC wurde unter Vakuum entfernt (Dünnschichtverdampfer, Vorverdampfer: 150°C, Hauptverdampfer: 160°C, 2 mbar). Dieses Vorgehen wird mehrfach wiederholt und die Reaktionsprodukte aus 5 identischen Versuchen werden vereinigt.
   Das mittlere Molekulargewicht beträgt ca. Mn(GPC) = 2605 g/mol und der PDI beträgt 1,19.
- Beispiel 2 - Herstellung von OH-Prepolymer auf Basis des Rohstoffes von Beispiel 1
   1200 g Rohstoff aus Beispiel 1 werden in einem Planschliffgefäß bei 75°Cvorgelegt und unter Rühren werde 0,23 g 2-Chlorpropionsäure, gefolgt von 107,5 g Desmodur 44 M bei 75°C zugegeben. Bei 75°C wird nachgerührt, bis der NCO% Wert auf 0% fällt. Die Viskosität des Prepolymers liegt bei 46.060 mPas bei 23°C. Das mittlere Molekulargewicht beträgt ca. Mn (GPC) = 9600 g/mol. Die OH-Zahl des Prepolymers liegt bei 14,0 mg KOH/g.

### Isocyanat-Komponente

- Desmodur^{®} 44 M: Desmodur^{®} 44 M Liquid ist ein monomeres Diisocyanat, das bei Raumtemperatur fest und oberhalb von etwa 40 °C flüssig ist. Der NCO-Gehalt liegt bei ca. 33,6 Gew.-%.
- Desmodur^{®} 2460 M: Desmodur^{®} 2460 M ist ein oberhalb 20 °C flüssiges Isomerengemisch von 2,4- und 4,4-Diphenylmethandiisocyanat. Der NCO-Gehalt liegt bei ca. 33,6 Gew.-%.
- Desmodur^{®} ultra N 3300: Desmodur^{®} ultra N 3300 ist ein aliphatisches Polyisocyanat (HDI-Trimerisat) mit einem geringen Restmonomergehalt von < 0,1%. Der NCO-Gehalt liegt bei ca. 21,8 Gew.-%.
- Desmodur^{®} ultra N 3600: Aliphatisches, niedrigviskoses Polyisocyanat (HDI-Trimerisat) mit einem geringen Restmonomergehalt von < 0,1%. Der NCO-Gehalt liegt bei ca. 23,0 Gew.-%.
- Desmodur^{®} E 23: Aromatisches Polyisocyanat-Prepolymer auf Basis von Diphenylmethandiisocyanat (MDI). Der NCO-Gehalt liegt bei ca. 15,4 Gew.-%.
- Beispiel 3: Herstellung von NCO-Prepolymer auf Basis des Rohstoffes von Beispiel 1
   Bei 75°C werden in einem Planschiffgefäß 250 g Desmodur 2460 M und 0,04 g 2-Chlorpropionsäure g vorgelegt. Anschließend werden 750g des Prepolymers aus Beispiel 2 langsam dazu getropft, bis ein Ziel NCO-Gehalt von 7,3% erreicht ist. Die Viskosität des Prepolymers liegt bei 36.300 mPas bei 23°C. Das mittlere Molekulargewicht beträgt ca. Mn (GPC) = 7200 g/mol.

### Herstellung von Zweikomponentenklebstoffen

Die Rohstoffe, die zur Herstellung des Zweikomponentenklebstoffes eingesetzt werden, werden vor der Formulierung des Klebstoffes für 3h bei 60°C erwärmt. In einem Becherglas wird die Isocyanat-reaktive- und die Isocyanat-Komponente gegeben und vermischt. Das Mischen erfolgt mit einem Holzspatel, bis eine homogene Mischung erreicht wird.

Erfinderische Beispiele zur Herstellung eines Zweikomponentenklebstoffes können der folgenden Tabelle entnommen werden.

**Tabelle 1: Herstellung Zweikomponenten-Polyurethanklebstoffe**

| Beispiel | 4 | 5 | 6 | 7 | 8 (V) | 9 (V) |
|---|---|---|---|---|---|---|
| Isocyanat-Komponente - Einwaage in [g] | | | | | | |
| Produkt aus Beispiel 3 | | 47,4 | 41 | | | |
| Desmodur^{®} E23 | 28,6 | 11,9 | 10,3 | | 19,8 | 19,5 |
| Desmodur^{®} N 3600 | 7,1 | | | | | |
| Desmodur^{®} N 3300 | | | | 18,8 | | |
| Isocyanat-reaktive Komponente - Einwaage in [g] | | | | | | |
| Produkt aus Beispiel 1 | | | | 81,2 | | |
| Produkt aus Beispiel 2 | 61,1 | | 46,3 | | | |
| Glycerin | 3,2 | 2 | 2,4 | | 1,6 | 1,6 |
| Baycoll^{®} AD 2047 | | 38,7 | | | | |
| Polyol 22 | | | | | 78,6 | |
| Acclaim^{®} Polyol 18200 N | | | | | | 78,9 |
| Gehalt CH2O in Gew.-% im Klebstofffilm | 14,6 | 9,2 | 19,9 | 22,8 | 0 | 0 |

Bei Beispielen 8 und 9 handelt es sich um Vergleichsbeispiele (V).

### Herstellung der ausgehärteten Zweikomponentenklebstoffe

Die Aushärtung der Polyurethanklebstoffe aus Beispiel 4 bis 9 erfolgt in Teflon-Schalen (Durchmesser: 15cm / Tiefe: 0,5 cm ). Durch Lagerung bei 23°C und 50% relativer Luftfeuchte für 7d und anschließender Nachlagerung für 48h bei 60°C wurden die Klebstofffilme ausgehärtet. Die Dicke der jeweiligen Klebstofffilme beträgt nach der Trocknung ca. 100 µm.

### Herstellung von Monomaterial-Mehrschichtsystemen

Für die Herstellung eines Monomaterial-Mehrschichtsystemen wird mit einem Hand-Laminiergerät, mit der Bezeichnung: K Control Coater Modell 623 / 624 (K101 / K202), durchgeführt. In dem Hand-Laminiergerät wird eine erste Folie eingespannt (Cast-Polypropylenfolie: Cast-Polypropylen Folie mit 50 µm Dicke; Hersteller: Profol GmbH). Die Folien liegen in DIN A4 Größe vor und wurde vor der Beschichtung mit dem Klebstoff mit Corona behandelt, sodass die Oberflächenspannung > 50 dyn beträgt. Auf die erste eingespannte Folie wird anschließend der Zweikomponentenklebstoff am oberen Rand, in Form einer Raupe aufgetragen. Danach wird der Klebstoff gleichmäßig mit Hilfe eines Rakels gleichmäßig auf der Folie verteilt. Der Zweikomponentenklebstoff wir mit einer Wärmepistole mit der Bezeichnung Steinel HL2002LE auf Stufe 100°C erwärmt, so dass sich eine Oberflächentemperatur von 60 °C ergibt. Im nächsten Schritt wird auf die beschichtete erste Folie eine zweite, identische Folie kaschiert. Der so erhaltene Verbund wird anschließend bei 60°C für 24h gelagert. Nach der Lagerung, und Abkühlung auf Raumtemperatur erfolgt die Bestimmung der Verbundfestigkeit im 180°-Schälversuch.

### Bestimmung der Verbundfestigkeit im 180°-Schälversuch

Zur Bestimmung der Schälfestigkeit werden die Verbundfolien in 15 mm breite Streifen zerschnitten. Anschließend werden die Streifen bei 23°C in einer Universalprüfmaschine für Schälfestigkeiten der Firma Zwick (Typ 5kN Allround Table-top BT2-FA005TH.A50.002) mit einer Geschwindigkeit von 100 mm/min bei einem Winkel von 2 × 90° (180°) abgezogen und die dabei erforderliche Kraft in Newton gemessen. Die angegebenen Werte sind die Mittelwerte aus fünf Einzelmessungen. Eine ermittelte Verbundfestigkeit kann der folgenden Tabelle entnommen werden.

**Tabelle 2: Verbundfestigkeit**

| | | |
|---|---|---|
| Beispiel 7 | Auftragsgewicht [g/m²] | Verbundfestigkeit [N/15mm] |
| | 3 | 1,2 |

Eine ausreichende Verbundfestigkeit ist gegeben, wenn ein Wert von mindestens 0,5 N/15mm erreicht wird.

### Verfahren zur Gewinnung eines Rezyklats aus Rohstoffen zur Herstellung von Monomaterial-Mehrschichtsystemen

Die ausgehärteten Zweikomponenten-Klebstofffilme werden mit einer Schere auf Stücke mit einer Größe von 0,5 cm × 0,5 cm zerschnitten. Im Extrusionsprozess werden 0,75 g der jeweiligen Zweikomponentenklebstoffe aus Beispiel 4 bis 9 mit 14,25 g PE-Granulat BorShape^{®} FX1001 gemischt und extrudiert. Die Extrusion erfolgt in einem Laborextruder (Mikro Compounder/ DSM Xplore/ Model 2005) bei 200 °C und einer Verarbeitungszeit von 6 Min. Aus der Extrusion resultiert ein homogener Polymerstrang.

### Bewertung der Rezyklat-Qualität

Ein Teil des extrudierten Polymerstrangs wird mit einer hydraulischen Presse (Handhebelpresse/ Vogt Maschinenbau GmbH/ LaboPress P150H) bei 200 °C, bei einer Verarbeitungszeit von 2 Min und einem Druck von 30 kN zu dünnen Polymerfilmen mit einer Dicke von 200 µm und einem Durchmesser von 5 cm verpresst. Die so erhaltenen dünnen Polymerfilme werden nach Abkühlung zur Prüfung auf Homogenität verwendet.Analog kann ein Rezyklat direkt aus einem Monomaterial-Schichtsystem bzw. Monomaterial-Schichtsystem-haltigem Abfall erzeugt werden. In diesem Fall werden der Klebstoff und das PE-Granulat durch das Monomaterial-Schichtsystem (bzw. den Monmaterial-Schichtsystem-haltigen Abfall) ersetzt.

Die Prüfkörper bzw. dünnen Polymerfilme werden unter ein Nikon Ni-E Lichtmikroskop mit motorisiertem Tisch gelegt, und es werden optische Mikrofotografien der Probenoberfläche im transmittierenden Licht aufgenommen. Eine vierfache Vergrößerung des verwendeten Objektivs wird eingesetzt. Um statistisch zuverlässige Daten zu erhalten, wird eine Gesamtfläche von 11,84 × 10,47 cm² der Probenoberfläche mit Hilfe des automatischen Mapping-Moduls untersucht, das 5 × 4 Bilder zusammengefügt. Nach der Aufnahme der Bilder wird eine automatische Bildanalyse mit der Nikon NIS Elements BR Version 5.4 Software durchgeführt. Defekte in der Probe werden identifiziert, indem Bereiche in der Probe anhand eines Schwellenwerts für die Intensität von dem Rest der Probe ermittelt werden. Für Defekte mit einer geringeren optischen Dichte als die der Matrix wird ein Schwellenwert von 150 angewendet. Für Defekte mit einer höheren optischen Dichte als die des Films wird ein Schwellenwert von 120 angewandt. Nach der Trennung wird eine weitere Größenbeschränkung auf die Ergebnisse angewendet, wobei Merkmale mit einem äquivalenten Durchmesser von weniger als 20 µm und einer Rundheit (Circularity) von weniger als 0,1 ausgeschlossen werden, um Artefakte zu entfernen. Die gefilterten Ergebnisse werden dann berechnet, und die Anzahl der Defekte, der Flächenanteil der Defekte und der mittlere äquivalente Durchmesser der Defekte werden angegeben.

**Tabelle 3: Bewertung der Rezyklat-Qualität**

| | Anzahl von Defekten [1] | Fläche der Defekte [%] | Gehalt CH₂O in Gew.-% im Rezyklat |
|---|---|---|---|
| Beispiel 10 (V) | 593 | 0,5 | 0 |
| PE-Granulat (NullWert) | | | |
| Beispiel 11 | 1128 | 1,8 | 0,73 |
| Klebstoff aus Beispiel 4 | | | |
| Beispiel 12 | 1061 | 2,3 | 0,46 |
| Klebstoff aus Beispiel 5 | | | |
| Beispiel 13 | 1387 | 2,5 | 1,00 |
| Klebstoff aus Beispiel 6 | | | |
| Beispiel 14 | 2112 | 2,2 | 1,14 |
| Klebstoff aus Beispiel 7 | | | |
| Beispiel 15 (V) | 4243 | 8,6 | 0 |
| Klebstoff aus Beispiel 8 | | | |
| Beispiel 16 (V) | 6794 | 12,4 | 0 |
| Klebstoff aus Beispiel 9 | | | |

Bei Beispielen 10,15 und 16 handelt es sich um Vergleichsbeispiele (V).

Wie sich anhand der Ergebnisse in Tabelle 2 zeigt, weisen die erfindungsgemäßen Rezyklate eine deutlich höhere Homogenität auf, ausgedrückt durch die gegenüber den Vergleichsbeispielen 15 und 16 deutlich geringeren Anzahl und Gesamtfläche der Fehlstellen.

## Patentansprüche

1. Verfahren zur Herstellung eines Monomaterial-Mehrschichtsystems, insbesondere eines recyclefähigen Monomaterial-Mehrschichtsystems, wobei das Verfahren die folgenden Schritte umfasst oder daraus besteht:
I) Bereitstellen von wenigstens zwei Monomaterial-Schichten;
II) Auftragen eines Zweikomponentenklebstoffs mittelbar oder unmittelbar auf wenigstens eine der beiden bereitgestellten Monomaterial-Schichten, wobei der Zweikomponentenklebstoff mindestens eine Isocyanat-reaktive Komponente sowie mindestens eine Isocyanat-Komponente umfasst;
III) Verbinden der Monomaterial-Schichten mittels des Zweikomponentenklebstoffs sowie Aushärten des Zweikomponentenklebstoffs unter Erhalt des Monomaterial-Mehrschichtsystems;
**dadurch gekennzeichnet, dass**
das Material der Monomaterial-Schichten Polyolefine umfasst und der Anteil des Polyolefins von 80,0 bis 99,30 Gew.-% beträgt, bezogen auf das Gesamtgewicht des Monomaterial-Mehrschichtsystems,
der Anteil des Zweikomponentenklebstoffs 0,70 bis 20,0 Gew.-% beträgt, bezogen auf das Gesamtgewicht des Monomaterial-Mehrschichtsystems,
die Isocyanat-reaktive Komponente und/oder die Isocyanat-Komponente [CH₂-O]ₙ-Einheiten enthält und
der ausgehärtete Zweikomponentenklebstoff einen Anteil von 7,0 bis 25,0 Gew.-% an [CH₂-O]ₙ-Einheiten aufweist, bezogen auf das Gesamtgewicht des Klebstoffs,
wobei n eine Zahl von 2 bis 50 ist.

2. Verfahren nach Anspruch 1, **dadurch gekennzeichnet, dass** die Isocyanat-reaktive Komponente des Zweikomponentenklebstoffs Polyole, insbesondere Polyesterpolyole, Polyetherpolyole, hydroxylgruppenhaltige Polyoxymethylen-Polyoxyalkylen-Copolymere, hydroxylgruppenhaltige Umsetzungsprodukte von hydroxylgruppenhaltigen Polyoxymethylen-Polyoxyalkylen-Copolymeren und Diisocyanaten oder Mischungen der vorgenannten Verbindungen umfasst oder daraus besteht.

3. Verfahren nach Anspruch 1 oder 2, **dadurch gekennzeichnet, dass** die Isocyanat-Komponente des Zweikomponentenklebstoffs
• monomere Polyisocyanate, insbesondere Hexamethylen-1,6-diisocyanat, Pentamethylen-1,5-diisocyanat, 1,4-Butandiisocyanat, Isophorondiisocyanat, IsToluol-2,4-diisocyanat, Toluol-2,6-diisocyanat, Diphenylmethan-2,2'-diisocyanat, Diphenylmethan-2,4'-diisocyanat, Diphenylmethan-4,4'-diisocyanat oder Mischungen davon;
• oligomere Polyisocyanate, welche aus mindestens zwei monomeren Polyisocyanaten hergestellt werden;
• Isocyanat-terminierte Präpolymere, welche durch Umsetzung von monomeren und/oder oligomeren Polyisocyanaten und Isocyanat-reaktiven Verbindungen mit > 1 Isocyanat-reaktiven Gruppen pro Moleküle hergestellt werden, wobei die Isocyanat-reaktive Verbindung bevorzugt Polyole, weiter bevorzugt hydroxylgruppenhaltige Polyoxymethylen-Polyoxyalkylen-Copolymere, Polyacrylate, Polycarbonate, Polyester, Polyurethane und/oder Polyether umfasst oder daraus besteht;
• oder Mischungen der vorgenannten Verbindungen
umfasst oder daraus besteht, wobei die Isocyanat-terminierten Präpolymere vorzugsweise [CH₂-O]ₙ-Einheiten wie in Anspruch 1 definiert aufweisen.

4. Verfahren nach einem der vorstehenden Ansprüche, **dadurch gekennzeichnet, dass** das n der [CH₂-O]ₙ-Einheiten eine Zahl von 8 bis 20 ist.

5. Verfahren nach einem der vorstehenden Ansprüche, **dadurch gekennzeichnet, dass** der Zweikomponentenklebstoff zudem organische Lösungsmittel, Katalysatoren, Füllstoffe, Prozesshilfsmittel, Haftvermittler, insbesondere Silane, Stabilisatoren, insbesondere Antioxidantien oder Mischungen davon enthält.

6. Verfahren nach einem der vorstehenden Ansprüche, **dadurch gekennzeichnet, dass** entweder die Isocyanat-reaktive Komponente oder die Isocyanat-Komponente ein mittleres Molekulargewicht Mn von < 1000 g/mol sowie eine durchschnittliche Funktionalität von > 2 und die jeweils andere Komponente ein mittleres Molekulargewicht Mn von > 1000 g/mol sowie eine Funktionalität von < 4 aufweist.

7. Verfahren nach einem der vorstehenden Ansprüche, **dadurch gekennzeichnet, dass** der Zweikomponentenklebstoff ein stöchiometrisches Verhältnis von Isocyanatgruppen zu Isocyanatreaktiven Gruppen zwischen 0,8:1 bis 2:1 aufweist.

8. Verfahren nach einem der vorstehenden Ansprüche, **dadurch gekennzeichnet, dass** das Polyolefin der Monomaterial-Schichten aus der Gruppe ausgewählt ist, umfassend oder bestehend aus Polyethylen, Polypropylen oder Mischungen davon.

9. Verfahren nach einem der vorstehenden Ansprüche, **dadurch gekennzeichnet, dass** der Anteil des Polyolefins von 95,0 bis 99,3 Gew.-% und/oder der Anteil des Zweikomponentenklebstoffs von 0,70 bis 10,0 Gew.-%, bevorzugt 1,0 bis 5,0 Gew.-% beträgt, jeweils bezogen auf das Gesamtgewicht des Monomaterial-Mehrschichtsystems.

10. Monomaterial-Mehrschichtsystem, insbesondere ein recyclefähiges Monomaterial-Mehrschichtsystem, erhalten oder erhältlich nach einem Verfahren gemäß einem der Ansprüche 1 bis 9.

11. Verwendung eines Monomaterial-Mehrschichtsystems gemäß Anspruch 10 als, vorzugsweise recyclefähiges, Verpackungsmaterial, insbesondere Verpackungsmaterial für Lebensmittel.

12. Verwendung eines Zweikomponentenklebstoffs definiert wie in einem der Ansprüche 1 bis 7 in Monomaterial-Mehrschichtsystemen, insbesondere zur Verbesserung der Recyclingfähigkeit von Monomaterial-Mehrschichtsystemen, wobei das Material der Monomaterial-Schichten Polyolefine mit einem Anteil von 80,0 bis 99,3 Gew.-% umfasst, bezogen auf das Gesamtgewicht des Monomaterial-Mehrschichtsystems.

13. Verfahren zur Gewinnung eines Rezyklats aus Monomaterial-Mehrschichtsystem-haltigem Abfall, welcher ein Monomaterial-Mehrschichtsystem gemäß Anspruch 10 enthält, wobei die Gewinnung die folgenden Schritte umfasst:
i. Zerkleinerung, Waschen und optional Sterilisation des Monomaterial-Mehrschichtsystem-haltigen Abfalls unter Erhalt einer Materialmischung;
ii. Optional Sortierung der Materialmischung;
iii. Optional Mischen der Materialmischung mit weiteren Bestandteilen, insbesondere mit Polyolefinen;
iv. Weitere Aufarbeitung, insbesondere Schmelzen und Extrudieren, der Materialmischung unter Erhalt des Rezyklats.

14. Formteile erhalten oder erhältlich durch die Verarbeitung eines gemäß dem Verfahren nach Anspruch 13 erhaltenen oder erhältlichen Rezyklats.
